# EUROPÄISCHE PATENTSCHRIFT

(11) **EP 4 522 895 B1**
(45) Veröffentlichungstag und Bekanntmachung des Hinweises auf die Patenterteilung: **09.12.2026**
(21) Anmeldenummer: 23726894.1
(22) Anmeldetag: 09.05.2023
(51) Int. Cl.: F16K 5/04, F04D 13/06, F04D 15/00, F16K 27/06, F16K 31/53, H02K 16/02

(54) **STELLVENTIL UND LEITUNGSSYSTEM**
CONTROL VALVE AND LINE SYSTEM
SOUPAPE DE RÉGULATION ET RÉSEAU DE CONDUITES

(30) Priorität: 12.05.2022 DE 102022111976
(43) Veröffentlichungstag der Anmeldung: 19.03.2025
(73) Patentinhaber: WOCO Industrietechnik GmbH, 63628 Bad Soden-Salmünster (DE)
(72) Erfinder: LORIG, Michael, 82131 Gauting (DE); SOLAZZO, Domenico, 67547 Worms (DE); REICHERT, Uwe, 36381 Schlüchtern (DE)
(74) Vertreter: Angerhausen, Christoph
(86) Internationale Anmeldenummer: PCT/EP2023/062251
(87) Internationale Veröffentlichungsnummer: WO 2023/217769

(56) Entgegenhaltungen:
- EP-A1- 3 376 036
- WO-A1-2021/122547
- CN-U- 209 622 166
- CN-U- 216 344 219
- DE-C1- 19 934 819
- US-A1- 2022 025 977

## Beschreibung

Die vorliegende Erfindung betrifft ein Stellventil, insbesondere ein Fluidventil, zum Einstellen einer Fluidströmung insbesondere eines Kraftfahrzeugs. Des Weiteren stellt die vorliegende Erfindung ein Leitungssystem für ein Kraftfahrzeug, insbesondere zum Kühlen eines Motors oder zum Bereitstellen eines Anoden- und/oder Kathodenstroms in einer Brennstoffzelle, bereit.

Zum Einstellen einer Fluidströmung in einem Fluidkreislauf ist es bekannt, mit Ventilsitzen kooperierende Ventilglieder zu verwenden. Dabei sind den Ventilsitzen Durchflussquerschnitten von Leitungen zugeordnet, die von der Fluidströmung durchströmt werden. Zum wenigstens teilweise Öffnen oder Schließen der Durchflussquerschnitte können die Ventilglieder innerhalb der Leitung gestellt werden. Zum Stellen der Ventilglieder werden vermehrt elektromagnetische Antriebe mit Elektromotoren eingesetzt, die jeweils separat pro Fluidventil ausgelegt und mit dem Fluidventil gekoppelt werden müssen. Das nimmt Bauraum in Anspruch, erhöht die Kosten und bringt Anforderungen bzgl. EMV mit sich. Dabei wird in der Regel ein Rotor des Elektromagneten angetrieben, der über Koppelelemente, wie eine Stellstange, mit dem Ventilglied verbunden ist. Die Stellstange ist dabei durch eine Gehäuseöffnung in der Leitung geführt, um den außerhalb der Leitung angeordneten elektromagnetischen Antrieb zum Stellen des Ventilglieds mit diesem stellkraftübertragungsgemäß zu verbinden. Darin ist zum einen nachteilig, dass eine aufwändige Abdichtung im Bereich der Gehäuseöffnung sichergestellt sein muss. Zum anderen ist damit hoher Energieverbrauch verbunden. Dies hängt insbesondere damit zusammen, dass hohe Reibungskräfte überwunden werden müssen, die durch die Abdichtung zwischen Stellstange und Gehäuseöffnung resultieren.

So offenbart die CN 216 344 219 U eine elektrische Erdgasventil-Fernbedienungsstation mit einem Ventilator zum Kühlen eines Elektromotors, wobei der Elektromotor als Antrieb des Ventilators und des Erdgasventils dient. Weiterhin beschreibt die CN 209 622 166 U einen elektrischen Antrieb zum Betreiben einer Ausgangswelle und eines Ventilators. Zudem gehen aus der US 2022/025977 A1 ein Kugelventil mit elektromotorischem Antrieb zum Einstellen eines Fluidstroms und aus der WO 2021/122547 eine Vorrichtung zur Handhabung von Fluid innerhalb eines zumindest teilweise elektrisch angetriebenen Fahrzeugs hervor.

Aus EP 2909515 B1 ist ein Wasserventil mit einem Wasser führenden Leitungsabschnitt bekannt, in dem ein Ventilglied angeordnet ist, das zum Schließen und Freigeben des Leitungsabschnitts mittels einer translatorisch bewegbaren Stellstange stellbar ist. Zum Betätigen der Stellstange ist ein Elektromotor vorgesehen, wobei der Stator des Elektromotors in einem separaten Gehäuseteil angeordnet ist und der Rotor kraftübertragungsgemäß mit der Stellstange derart verbunden ist, dass eine Rotation des Rotors in eine translatorische Bewegung der Stellstange umgewandelt wird. Der Rotor und der Stator sind durch eine unmagnetische Hülse voneinander getrennt. Ferner ist ein zusätzlicher Gehäusepfropfen zum Verbinden der beiden Gehäuseteile vorgesehen. In dem Pfropfen ist eine zentrale Durchgangsöffnung für die Stellstange eingebracht. Bei EP 2909515 B1 existiert die oben beschriebene Dichtungsproblematik sowie die damit verbundenen Energieverluste. Ferner ist die Konstruktion des Wasserventils gemäß EP 2909515 B1 aufwendig und bedarf eines hohen Bauraums quer zur Wasserströmungsrichtung.

Es ist Aufgabe der vorliegenden Erfindung, die Nachteile aus dem bekannten Stand der Technik zu überwinden, insbesondere ein kostengünstigeres Stellventil mit verringertem Energieverbrauch und/oder verringertem Bauraumbedarf bereitzustellen.

Diese Aufgabe wird durch die Merkmale des unabhängigen Anspruchs gelöst.

Danach ist ein Stellventil zum Einstellen einer Fluidströmung insbesondere eines Kraftfahrzeugs bereitgestellt. Das Stellventil kann auch als Fluidventil ausgestaltet sein bzw. bezeichnet werden. Gattungsgemäße Stellventile werden beispielsweise in Kraftfahrzeugen, insbesondere im Kraftfahrzeugmotorbereich und/oder im Kraftfahrzeugbatteriebereich bei elektromotorisch betriebenen Kraftfahrzeugen, zu deren Thermomanagement eingesetzt, das heißt zum Verteilen, Mischen, Absperren und dergleichen von Fluidströmungen, wie Kühlmittelströmungen.

Das Stellventil umfasst ein fluidführendes Fluidgehäuse. Das Fluidgehäuse kann einen Fluidkanal aufweisen. Desweiteren kann das Fluidgehäuse einen Fluideintrittsstutzen und einen Fluidaustrittsstutzen zum Koppeln an ein Leitungssystem eines Kraftfahrzeugs aufweisen. Über den Fluideintrittsstutzen kann das Fluid in das Fluidgehäuse gelangen und es über den Fluidaustrittsstutzen wieder verlassen. Zwischen Fluideintrittsstutzen und Fluidaustrittsstutzen in Strömungsrichtung des Fluids betrachtet kann sich ein Ventilraum befinden, in dem ein Ventilglied zum Schließen und wenigstens teilweise Freigeben des Fluidgehäuses, insbesondere des Fluidkanals, bewegbar ist.

Das Stellventil umfasst ferner ein stellbares Ventilglied, das zum Schließen und wenigstens teilweise Freigeben des Fluidgehäuses, insbesondere des Fluidkanals, stellbar ist. Insbesondere ist das Ventilglied um eine Rotationsstellachse rotierbar. Das Ventilglied kann auch als Drehkolben bezeichnet werden beziehungsweise ausgebildet sein. Insbesondere kann derjenige Raum, in dem sich das Ventilglied um seine Rotationsstellachse rotieren kann, als Ventilraum bezeichnet werden. Zwischen dem Ventilglied und dem Ventilgehäuse kann wenigstens eine Dichtung angeordnet sein, die im Schließzustand des Ventilglieds beziehungsweise des Stellventils die Dichtigkeit sicherstellt. Beispielsweise ist die Rotationsstellachse im Wesentlichen senkrecht zur Strömungsrichtung des Fluids durch das Fluidgehäuse und/oder zur Längserstreckung des Fluidgehäuses, insbesondere des Fluideintritts- und des Fluidaustrittsstutzens angeordnet. Beispielsweise kann das Ventilglied so gelagert sein, dass im Wesentlichen ausschließlich ein Drehbewegungsfreiheitsgrad des Ventilglieds besteht.

Des Weiteren umfasst das Stellventil eine Arbeitsmaschine zum Zuführen von Energie zu einem weiteren Fluid, wie einem Thermomanagement-Fluid, insbesondere des Kraftfahrzeugs mit einem insbesondere elektromagnetischen Antrieb zum Bereitstellen der Energie. Bei der Arbeitsmaschine kann es sich um eine Fluidenergiemaschine, insbesondere eine Pumpe, oder eine Strömungsmaschine, wie ein Lüfter oder Ventilator, handeln, die dazu dient, ein zu dem von dem Stellventil einzustellenden Fluid separates Fluid bzw. separate Fluidströmung zu beeinflussen. Beispielsweise bilden der das Fluid einstellende Teil des Stellventils und die das davon separate Fluid beeinflussende Arbeitsmaschine eine Montageeinheit, die als Einheit an ein Fluidleitungssystem, beispielsweise ein Fluidleitungssystem eines Kraftfahrzeugs, wie eines KFZ-Thermomanagementsystems, angeschlossen und davon demontiert werden kann.

Erfindungsgemäß ist der Antrieb der Arbeitsmaschine kraftübertragungsgemäß mit dem Ventilglied zum Stellen des Ventilglieds verbunden. Kurz gesagt ist mittels der vorliegenden Erfindung ein kostengünstigeres Stellventil, insbesondere "Smart-Valve", bereitgestellt, das auf einen separaten Aktuator bzw. Motor verzichtet, indem der Stator einer ohnehin vorhandenen Arbeitsmaschine, wie beispielsweise einer elektromagnetischen Pumpe des KFZ-Thermomanagementsystems, verwendet wird, um mit einer einen Rotor bildenden Einheit aus Ventilglied, insbesondere Drehkolben, und damit verbundenem Magnetring im Stellventil zusammenzuwirken. Dadurch kann ein deutlich kompakteres und kostengünstigeres Stellventil bereitgestellt werden, insbesondere weil das Stellventil keinen separaten Aktuator oder Motor benötigt, sondern so ausgelegt ist, dass auf einfache Weise der bereits vorhandene Aktuator oder Motor einer Arbeitsmaschine verwendet werden kann. Ferner entfällt die Notwendigkeit eines separaten Elektronikanschlusses für das Stellventil, da auch diesbezüglich auf die Elektronikversorgung der Arbeitsmaschine zurückgegriffen werden kann.

Der Antrieb der Arbeitsmaschine ist als elektromagnetischer Antrieb, beispielsweise als Elektromotor, mit einem Rotor und einem Stator ausgebildet und der Stator ist kraftübertragend mit dem Ventilglied gekoppelt. Die Kraftübertragung kann mechanisch und/oder insbesondere kontaktlos magnetisch sein.

Das Stellventil umfasst einen weiteren Rotor, der in dem Fluidgehäuse angeordnet und form- und/oder kraftschlüssig mit dem Ventilglied gekoppelt ist. Der elektromagnetische Antrieb kooperiert dabei mit dem weiteren Rotor, um das Ventilglied zu betätigen. Der weitere Rotor kann teilweise durch das Ventilglied und einen mit dem Ventilglied kraftübertragend verbundenen Magnetring gebildet sein.

Gemäß einer beispielhaften Ausführung der vorliegenden Erfindung ist die Kraftübertragung vom Antrieb auf das Ventilglied mechanisch und/oder insbesondere kontaktlos magnetisch. Für die mechanische Kraftübertragung kommen sämtliche gängigen Kraftübertragungstechniken infrage, beispielsweise übliche denkbare Getriebevarianten. Die insbesondere kontaktlose magnetische Kraftübertragung kann beispielsweise dadurch realisiert werden, dass der Antrieb der Arbeitsmaschine ein elektromagnetischer Antrieb ist, wie beispielsweise ein Elektromotor. Der Stator kann in einem Gehäuse der Arbeitsmaschine untergebracht sein, das von dem Fluidgehäuse hermetisch getrennt ist. Alternativ könnte auch der Rotor in dem getrennten Gehäuse untergebracht sein. Dabei kann jeweils die andere Komponente von Rotor und Stator, insbesondere der Rotor, in dem Fluidgehäuse untergebracht sein. Das Gehäuse kann separat von dem Fluidgehäuse herstellt sein und als Vormontageeinheit inkl. den elektromagnetischen Komponenten des Antriebs bereitgestellt sein. Mittels des elektromagnetischen Antriebs und der hermetischen Trennung der Gehäuseteile, also von Fluid- und Gehäuse, ist eine berührungslose, kontaktfreie Kraftübertragung von Antrieb auf Ventilglied realisiert. Beispielsweise bedarf es keiner sich durch die Gehäuseteile erstreckenden Stell- beziehungsweise Ventilstange, die den Antrieb kraftschlüssig mit dem Ventilglied verbindet, insbesondere eine Rotationsantriebskraft des Antriebs in eine Rotationsbewegung des Stellglieds überträgt. Dadurch kann zum einen ein deutlich einfacherer und kompakterer Aufbau des Stellventils erreicht werden. Es kann auf Abdichtungen verzichtet werden. Ein weiterer Vorteil besteht darin, dass das Stellventil im Vergleich zum Stand der Technik deutlich effizienter ist. Die zwischen der Stell- beziehungsweise Ventilstange und deren Abdichtung gegenüber den Gehäuseteilen auftretenden Reibungskräfte müssen bei der kontaktfreien und berührungslosen Kraftübertragung nicht mehr beim Stellen des Ventilglieds überwunden werden.

Der Rotor kann gemäß einer weiteren beispielhaften Ausführung derart in dem Fluidgehäuse angeordnet sein, dass zumindest im geöffneten Zustand des Ventilglieds der weitere Rotor von der Fluidströmung umströmt ist. Durch die Unterbringung des Rotors in dem Fluidbereich, also einem vom Fluidgehäuse definierten, mit Fluid umströmten Fluidgehäuseabschnitt, kann ein besonders kompaktes Stellventil generiert werden. Ventilglied und Rotor können kompakt und bauraumsparend formund/oder kraftschlüssig miteinander gekoppelt sein. Durch die Anordnung im Fluidströmungsbereich des Rotors sind die Kopplungsstellen zwischen Rotor und Ventilglied zumindest im geöffneten Zustand des Ventilglieds, insbesondere permanent, von Fluid geschmiert. Somit kann auf eine sich durch das Fluidgehäuse und das Gehäuse erstreckende Stell- beziehungsweise Ventilstange und die damit verbundenen Abdichtungsprobleme verzichtet werden.

In einer beispielhaften Ausführung der vorliegenden Erfindung ist der weitere Rotor drehfest mit dem Ventilglied gekoppelt oder aus einem Stück damit hergestellt. Somit kann sichergestellt sein, dass die Drehantriebskraft des elektromagnetischen Antriebs verlustfrei auf das Ventilglied übertragen wird, um dieses zu stellen, insbesondere zu schließen oder wenigstens teilweise zu öffnen. Alternativ oder zusätzlich kann das Ventilglied zum Stellen um eine Rotationsstellachse rotierbar sein. Das Ventilglied kann demnach als Drehkolben bezeichnet beziehungsweise ausgestaltet sein. Das Ventilglied kann beispielsweise bezüglich seiner axialen Position in Bezug auf die Rotationsstellachse fest beziehungsweise stationär angeordnet sein. Beispielsweise kann ausschließlich ein Drehbewegungsfreiheitsgrad des Ventilglieds bestehen.

In einer weiteren beispielhaften Ausführung der vorliegenden Erfindung ist das Ventilglied, insbesondere der mit dem Ventilglied gekoppelte weitere Rotor, unabhängig von dem Rotor des elektromagnetischen Antriebs der Arbeitsmaschine ansteuerbar. Beispielsweise kann der Stator der Arbeitsmaschine mit einer überlagerten Pulsweitenmodulation bestrombar sein. Somit ist es möglich, das Ventilglied, insbesondere den Drehkolben, individuell und getrennt vom Rotor der Arbeitsmaschine anzusteuern. Dadurch kann auf einfache Art und Weise der zuverlässige Betrieb der Arbeitsmaschine einerseits sowie des Fluid stellenden Ventilglieds andererseits realisiert werden, ohne dass die beiden Komponenten sich gegeneinander beeinflussen bzw. beeinträchtigen, wobei weiterhin auf denselben insbesondere elektrischen Antrieb für beide Komponenten zurückgegriffen werden kann.

In einer beispielhaften Weiterbildung der vorliegenden Erfindung ist die Arbeitsmaschine eine Fluidenergiemaschine, insbesondere eine Pumpe, oder eine Strömungsmaschine, wie ein Lüfter oder Ventilator. Eine Fluidenergiemaschine ist im Allgemeinen eine Maschine, in der mechanische Arbeit mit einem Fluid ausgetauscht wird, wobei die Fluidenergiemaschine die Arbeit auf das Fluid abgibt. Als Strömungsmaschine wird im Allgemeinen eine Fluidenergiemaschine bezeichnet, bei der die Energieübertragung zwischen Fluid und Maschine in einem offenen Raum durch eine Strömung nach den Gesetzen der Fluiddynamik über den Umweg der kinetischen Energie erfolgt.

In einer weiteren beispielhaften Ausführung der vorliegenden Erfindung ist das Ventilglied bezüglich des Gehäuses und des Fluidgehäuses rotatorisch gelagert. Beispielsweise ist das Ventilglied über je eine Lagerung, insbesondere ein Rotationslager, an dem Gehäuse und dem Fluidgehäuse gelagert. Beispielsweise können die Lagerungen durch einen ventilgliedseitigen Lagerungszapfen und eine gehäuseteilseitige Lagerungsvertiefung, die ineinander eingreifen, realisiert sein. Beispielsweise besitzt das Ventilglied einen dem Fluidgehäuse zugewandten Lagerungszapfen, der mit einer fluidgehäuseseitigen Lagerungsvertiefung zusammenwirkt. Desweiteren kann das Ventilgehäuse eine dem Gehäuse zugewandte Lagerungsvertiefung aufweisen, die mit einem gehäuseseitigen Lagerungszapfen zusammenwirkt. Die Lagerungen können sich in axialer Flucht zueinander befinden und/oder entlang der Rotationsstellachse orientiert sein.

Gemäß einer beispielhaften Weiterbildung des erfindungsgemäßen Stellventils sind die Lagerungen derart insbesondere in dem Fluidgehäuse angeordnet, dass sie permanent von Fluid umströmt sind. Auf diese Weise können die Lagerungen kontinuierlich geschmiert werden. Es bedarf keiner zusätzlichen Schmiermittelzuführung. Die Schmierung kann ausschließlich über die ohnehin strömende Fluidströmung realisiert werden.

Gemäß einer weiteren beispielhaften Ausführung der vorliegenden Erfindung sind der weitere Rotor und der Stator des elektromagnetischen Antriebs und ggf. eine Lagerung zum Lagern des Ventilglieds an dem Gehäuse, wie ein Lagerungszapfen, in Bezug auf die Rotationsstellachse auf gleicher Höhe angeordnet. Auf diese Weise kann insbesondere der Bauraum in Rotationsstellachsenrichtung möglichst gering gehalten werden. Mit anderen Worten kann die Lagerung radial in Bezug auf die Rotationsstellachse von dem Rotor umgeben sein, der wiederum radial in Bezug auf die Rotationsstellachse von dem Stator umgeben sein kann.

In einer weiteren beispielhaften Ausführung des erfindungsgemäßen Stellventils sind das Fluidgehäuse und das Gehäuse stoffschlüssig miteinander verbunden. Die stoffschlüssige Verbindung kann beispielsweise durch Schweißen, insbesondere Laserschweißen oder Reibschweißen, oder Löten erreicht werden. Durch die stoffschlüssige Verbindung der Gehäuseteile kann auf zusätzliche Abdichtmaßnahmen, insbesondere Abdichtelemente, verzichtet werden. In einer beispielhaften Ausführung sind Fluidgehäuse und Gehäuse mittels Laserschweißen aneinander befestigt, wobei das radial innere Bauteil, beispielsweise das Fluidgehäuse aus einem laserabsorbierenden Material oder Werkstoff, insbesondere Kunststoffmaterial, hergestellt ist, während das radial äußere Bauteil, beispielsweise das Gehäuse aus einem lasertransparenten Material oder Werkstoff, insbesondere aus Kunststoffmaterial, hergestellt ist.

Gemäß einer weiteren beispielhaften Ausführung des erfindungsgemäßen Stellventils sind das Fluidgehäuse und das Gehäuse frei von einer das Fluidgehäuse und das Gehäuse verbindenden Durchführung insbesondere für eine die Antriebskraft des Antriebs auf das Ventilglied übertragende Kraftübertragungskomponente, wie eine Stellstange. Somit ist es möglich, das Gehäuse vollständig von dem Fluidgehäuse zu isolieren beziehungsweise hermetisch abzutrennen. Damit sind keine Schwachstellen in Bezug auf die Abdichtung beziehungsweise Dichtigkeit der Gehäuseteile vorhanden.

In einer weiteren beispielhaften Ausführung der vorliegenden Erfindung ist das Gehäuse insbesondere stoffschlüssig mit einem Deckel verschlossen. Beispielsweise kann das Gehäuse eine elektrische Anschlussstelle, wie einen elektrischen Gerätestecker, aufweisen oder tragen. Der Deckel und das Gehäuse mit der elektrischen Anschlussstelle gewährleisten eine einfache Montage beziehungsweise elektrische Anbindung an eine Energiequelle und/oder eine einfache elektrische Verbindung, beispielsweise zu einer Steuereinheit, insbesondere des Kraftfahrzeugs. Der Deckel kann das Gehäuse hermetisch abschließen. Die Aneinanderbefestigung kann beispielsweise mittels Laserschweißen oder Reibschweißen erfolgen, wobei beim Laserschweißen darauf zu achten ist, dass das radial innere Bauteil, beispielsweise der Deckel aus einem laserabsorbierenden Werkstoff, insbesondere Kunststoffmaterial, hergestellt ist, während das radial äußere Bauteil, beispielsweise das Gehäuse aus einem lasertransparenten Werkstoff, insbesondere Kunststoffmaterial, hergestellt ist. In einer beispielhaften Ausführung kann es möglich sein, das abgeschlossene Gehäuse atmungsaktiv auszugestalten. Dabei kann eine gaspermeable Membran eingesetzt werden, die flüssigkeitsabweisend ist. Die gaspermeable Membran kann beispielsweise im Gehäuse oder im Deckel angeordnet sein. Die Membran kann randseitig, also in Bezug auf die Rotationsachse des Drehkolbens radial außenseitig, eingespannt sein und/oder zum mechanischen Schutz in einem Gitterkäfig positioniert sein. Beispielsweise kann der Gitterkäfig Teil des Deckels sein. Es ist grundsätzlich möglich, die Membran beliebig zu platzieren, wobei sicherzustellen ist, dass die Membran umfänglich eingespannt ist. Die Membran kann eine runde oder eckige Form aufweisen. Beispielsweise wird die Membran eingeschweißt, insbesondere von innen, und möglicherweise mit einem Gitterkäfig geschützt. Grundsätzlich ist ferner sicherzustellen, dass die Membran fluiddicht im Deckel, bzw. im Gitterkäfig, fixiert ist.

Ferner ist die Membran so wählen, dass dessen Membranfläche zum Gasaustausch dient und Feuchtigkeit fernhält.

In einer weiteren beispielhaften Ausführung des erfindungsgemäßen Stellventils ist der Antrieb mit dem Ventilglied über ein Planetengetriebe kraftübertragend gekoppelt. Es wurde herausgefunden, dass Dichtungselemente zwischen Ventilglied und Fluidgehäuse notwendig sein können, um die gewünschte Dichtigkeit in den verschiedenen Ventilstellungen des Stellventils zu gewährleisten. Der dabei resultierende erhöhte Kraftaufwand zum Betätigen des Stell-Ventilglieds kann durch das Vorsehen eines Planetengetriebes kompensiert werden. Insbesondere ist es mittels des Planetengetriebes möglich, auf kostengünstige und/oder leistungsarme elektromagnetische Antriebe zurückzugreifen.

In einer beispielhaften Weiterbildung des erfindungsgemäßen Stellventils ist das Planetengetriebe insbesondere derart angeordnet, dass es wenigstens im geöffneten Zustand des Ventilglieds, insbesondere permanent, von Fluid umströmt ist. Somit kann eine wenigstens im geöffneten Zustand des Ventilglieds, insbesondere kontinuierliche, Schmierung des Planetengetriebes, insbesondere der ineinander kämmenden, Komponenten des Planetengetriebes, ermöglicht werden.

In einer weiteren beispielhaften Weiterbildung des erfindungsgemäßen Stellventils weist das Planetengetriebe Planetenräder auf, die drehbar an dem Ventilglied oder dem Gehäuse gelagert sind und zum Bewegen des Stellglieds mit einem an dem Ventilglied, dem Fluidgehäuse oder dem Gehäuse angeordneten Außenzahnkranz zusammenwirken. Beispielsweise kann das Ventilglied oder das Gehäuse insbesondere in Rotationsrichtung des Ventilglieds orientierte Lagerzapfen aufweisen, die insbesondere einstückig an das Ventilglied oder das Gehäuse angeformt sind und gegenüber denen die Planetenräder drehbar gelagert sind. Die Planetenräder können alternativ eine drehfest mit den Planetenrädern verbundene Welle aufweisen, die in einer entsprechenden Lagerung im Ventilglied rotierbar aufgenommen beziehungsweise gelagert sind. Beispielsweise ist der Außenzahnkranz in das Ventilglied, das Fluidgehäuse oder das Gehäuse eingebracht, insbesondere aus einem Stück mit Fluidgehäuse, Ventilglied oder Gehäuse hergestellt. Mit anderen Worten kann eine Innenwand des Fluidgehäuses, des Gehäuses oder des Ventilglieds mit dem Außenzahnkranz versehen sein. Ferner kann das Fluidgehäuse zum Gehäuse hin mit einer Abdeckung insbesondere fluiddicht, vorzugsweise hermetisch, abgeschlossen sein. Die Planetenräder können auf Bolzen laufen, die im Gehäuse sitzen. Im Ventilglied kann im Gegenzug eine Nut vorgesehen sein, in der die Bolzen frei laufen können.

Gemäß einem weiteren Aspekt der vorliegenden Erfindung, der mit den vorhergehenden Aspekten und beispielhaften Ausführungen kombinierbar ist, ist ein Leitungssystem für ein Kraftfahrzeug, insbesondere zum Kühlen eines Motors oder zum Bereitstellen eines Anoden- und/oder Kathodenstroms in einer Brennstoffzelle, bereitgestellt. Das Leitungssystem umfasst ein Stellventil gemäß einem der zuvor beschriebenen Aspekte beziehungsweise beispielhaften Ausführungen. Das Leitungssystem kann beispielsweise dazu dienen, eine Fluidquelle, insbesondere eine Kühlmittelquelle, mit einer zu kühlenden und/oder mit dem Fluid zu versorgenden Kraftfahrzeugkomponente zu verbinden.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine perspektivische Ansicht einer beispielhaften Ausführung eines erfindungsgemäßen Stellventils;
- Figur 2: eine Draufsicht auf das Stellventil gemäß Figur 1;
- Figur 3: eine Schnittansicht des Stellventils der Figuren 1 und 2 gemäß der Linie III-III in Figur 2;
- Figur 4: eine Schnittansicht des Stellventils der Figuren 1 bis 3 gemäß der Linie IV-IV in Figur 3; und
- Figur 5: eine Schnittansicht des Stellventils der Figuren 1 bis 4 gemäß der Linie VI-VI in Figur 3.

In der folgenden Beschreibung beispielhafter Ausführungen erfindungsgemäßer Stellventile anhand der beiliegenden Figuren ist ein erfindungsgemäßes Stellventil im Allgemeinen mit der Bezugsziffer (1) versehen. Das erfindungsgemäße Stellventil (1) wird beispielsweise im Kraftfahrzeug zu dessen Thermomanagement eingesetzt und dient dazu, Fluidströmungen zu verteilen, zu mischen, abzusperren und/oder einzustellen.

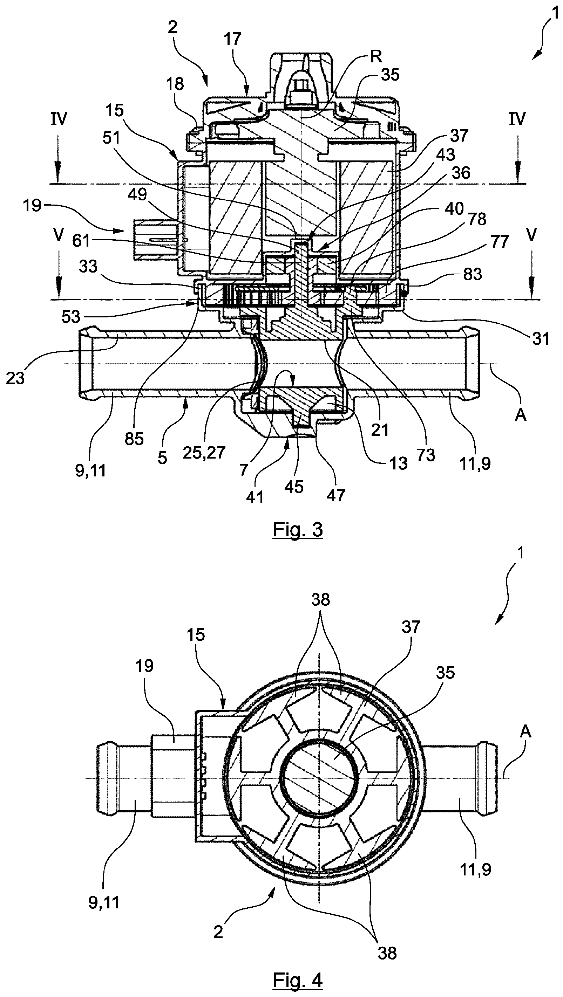

Das Stellventil (1), insbesondere Fluidventil, umfasst im Wesentlichen die folgenden Hauptkomponenten: Eine Arbeitsmaschine (2), wie eine Pumpe, mit einem elektromagnetischen Antrieb (3), der in einem Gehäuse (15) der Arbeitsmaschine untergebracht ist (Figur 3); ein fluidführendes Fluidgehäuse (5); und ein stellbares Ventilglied (7) zum Schließen und wenigstens teilweise Freigeben des Fluidgehäuses (5) (siehe Figur 3).

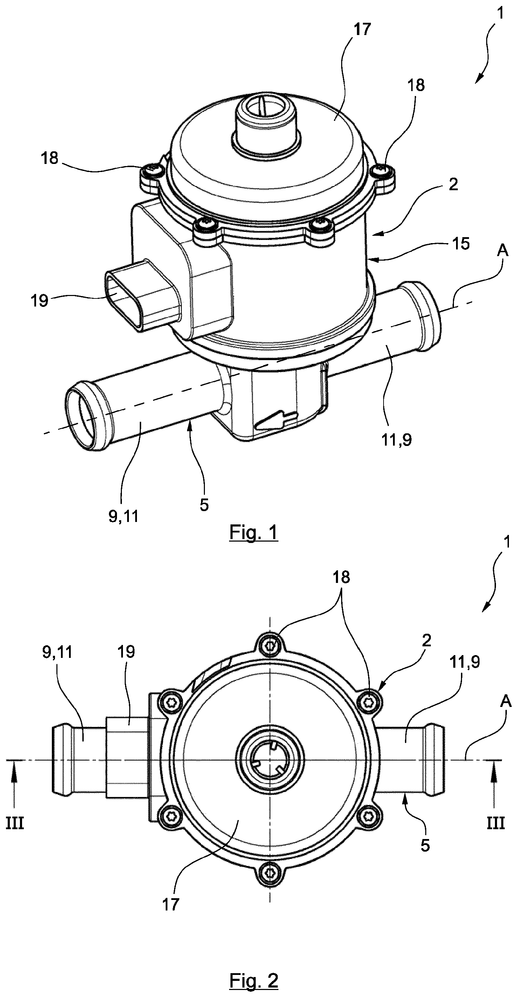

Das Fluidgehäuse (5) umfasst einen Fluideintrittsstutzen (9, 11) und einen Fluidaustrittsstutzen (11, 9) zum Anschließen an ein Leitungssystem, beispielsweise eines Kraftfahrzeugs. Die Stutzen (9, 11) sind als hohle, zylindrische Rohrabschnitte ausgebildet und erstrecken sich entlang einer gemeinsamen Längsachse A. In Strömungsrichtung betrachtet zwischen Fluideintrittsstutzen und Fluidaustrittsstutzen (9, 11) befindet sich ein Ventilraum (13; s. Figur 3), der denjenigen Bereich im Inneren des Fluidgehäuses (5) ausmacht, in dem sich das Ventilglied (7) bei einer Stellbewegung bewegen kann. Das Fluidgehäuse (5) ist fest und stoffschlüssig mit dem Gehäuse (15) verbunden. Das Gehäuse (15) wiederum weist einen Deckel (17) auf, der mit dem Gehäuse (15) fest und/oder stoffschlüssig verbunden ist, sowie eine elektrische Anschlussstelle (19) zur Elektronikversorgung sowohl für den elektromagnetischen Antrieb (3) als auch die Betätigung des Ventilglieds (7). Wie in Figur 1 zu sehen ist, ist der Deckel (17) mit dem Gehäuse (15) mittels Verschraubungen (18) verschraubt. Das Gehäuse (15) inklusive Deckel (17) sitzt im Wesentlichen zentral auf dem Ventilraumbereich (13) des Fluidgehäuses (5). Der Deckel (17) schließt das Gehäuse (15) hermetisch ab. Die Aneinanderbefestigung kann beispielsweise mittels Laserschweißen oder Reifschweißen erfolgen, wobei beim Laserschweißen darauf zu achten ist, dass das radial innere Bauteil, hier der Deckel (17) aus einem laserabsorbierenden Werkstoff, insbesondere Kunststoffmaterial, hergestellt ist, während das radialäußere Bauteil, hier das Gehäuse (15) aus einem lasertransparenten Werkstoff, insbesondere Kunststoffmaterial, hergestellt ist.

Das Stellventil (1) gemäß der Figuren 1 bis 5 dient beispielsweise dazu, eine über den Fluideintrittsstutzen (9, 11) eintretende Fluidströmung, wie eine Kühlmittelströmung, einzustellen, das heißt, ein über den Fluidaustrittsstutzen des Stellventils (1) austretendes Fluidvolumen, insbesondere Kühlmittelvolumen, einzustellen. Beispielsweise kann das Stellventil den vollen Strömungsquerschnitt innerhalb des Fluidventils (5) öffnen, verschließen oder teilweise freigeben, je nach Bedarf oder Einstellung, die beispielsweise durch eine übergeordnete Stellelektronik, wie eine Kraftfahrzeugelektronik, erfolgen kann. Die elektrische Verbindung kann beispielsweise über die elektrische Anschlussstelle (19) erfolgen.

Figur 2 zeigt eine Draufsicht auf das Stellventil (1) gemäß Figur 1. In Figur 2 ist ferner eine Linie III-III eingezeichnet, gemäß welcher die Schnittansicht nach Figur 3 generiert ist. Anhand von Figur 3 wird die Funktionsweise des Stellventils (1) näher beschrieben.

Wie bereits beschrieben wurde, ist im Inneren des Fluidgehäuses (5) das Stellventil (7) untergebracht und rotierbar um eine Rotationsachse, die mit der Bezugsziffer (R) angedeutet ist, rotierbar gelagert. Bei dem Stellventil (7) gemäß den beispielhaften Ausführungen handelt es sich um einen Drehkolben. Der Drehkolben weist eine zentrale Bohrung (21) auf, die zum Zulassen einer Fluidströmung durch das Stellventil (1) in Bezug auf einen von dem Fluidgehäuse (5) begrenzten Fluidkanal (23) ausgerichtet ist. Der Fluidkanal (23) wird in der geöffneten Ventilstellung gebildet durch den rohrartigen Fluideintrittsstutzen (9, 11), den rohrartigen Fluidaustrittsstutzen (11, 9) und die Innenbohrung (21) des Ventilglieds (7). Zwischen dem Ventilglied (7) und der Innenwandung des Fluidgehäuses (5) kann eine oder mehrere Dichtungen (25, 27) angeordnet sein, um die Dichtigkeit in der Schließstellung (5) sicherzustellen. Beispielsweise sind die Dichtungen (25, 27) im Bereich eines Ventilsitzes (29) des Fluidgehäuses (5) angeordnet, der mit dem Ventilglied (7) zum Schließen und insbesondere zum Öffnen des Fluidkanals (23) zusammenwirkt.

Das Fluidgehäuse (5) umfasst einen sich von den zylindrischen Außenmantelflächen der Fluideintritts- beziehungsweise Fluidaustrittsstutzen (9, 11) wegerstreckenden und wenigstens teilweise den Ventilraum (13) begrenzenden insbesondere stufenförmigen Ringflansch (31), auf dem das Gehäuse (15) sitzt. Beispielsweise ist ein stirnseitiges Ende (33) des Ringflansches (31) mit dem Gehäuse (15) stoffschlüssig verbunden, insbesondere verschweißt. Das Gehäuse (15) ist in Richtung des Fluidgehäuses (5) geschlossen. Insbesondere weist das Gehäuse (15) eine Schalenform auf. Das Fluidgehäuse (5) ist im Bereich des Ringflansches (31) zur Umgebung hin offen, insbesondere in Richtung des Gehäuses (15) hin offen und durch dieses verschlossen, insbesondere hermetisch abgedichtet. Insofern ist das Fluidgehäuse (5) von dem Gehäuse (15) hermetisch abgetrennt. Fluid aus dem Fluidgehäuse (5) kann nicht in das Gehäuse (15) gelangen.

Innerhalb des Gehäuses (15) sind die wesentlichen Komponenten des elektromagnetischen Antriebs (3) sowie die Funktionskomponenten der Arbeitsmaschine (2) aufgenommen. In Figur (3) ist zu erkennen, dass der Stator (37) des elektromagnetischen Antriebs (3) der Arbeitsmaschine (2) im Wesentlichen senkrecht zur Rotationsachse (R) orientiert ist und den Rotor (35) des elektromagnetischen Antriebs (3) der Arbeitsmaschine (2) radial außenliegend umgibt. Mittels elektromagnetischen Antriebs (3) wird der Betrieb der Arbeitsmaschine (2) ermöglicht.

Um das Ventilglied (7) zu betätigen, kooperiert der elektromagnetische Antrieb (3) mit einem weiteren Rotor (36), der kraftübertragend mit dem Ventilglied (7) gekoppelt ist. Der weitere Rotor (37) ist im Fluidbereich des Fluidgehäuses (5) angeordnet und formund/oder kraftschlüssig mit dem Ventilglied (7) gekoppelt, um die von dem elektromagnetischen Antrieb (3) generierte Drehantriebskraft dem Ventilglied (7) zum Betätigen desselben mitzuteilen. Gemäß der in den Figuren beispielhaft abgebildeten Ausführung der vorliegenden Erfindung ist der weitere Rotor (36) gebildet durch eine Einheit aus Ventilglied (7) und einem damit drehfest verbundenen Magnetring (40). Die Kraftübertragung zwischen Stator (37) und Rotor (36) erfolgt berührungslos und kontaktfrei, nämlich durch Magnetismus. Die Anordnung aus Stator (37) des elektromagnetischen Antriebs (3) der Arbeitsmaschine (2) und dem weiteren, dem Ventilglied (7) zugeordneten Rotor (36) ist so gewählt, dass das Ventilglied (7) von dem davon getrennten elektromagnetischen Antrieb (3) der Arbeitsmaschine (2) betätigt werden kann, ohne dass ein separater Antrieb oder eine separate Elektronikversorgung notwendig ist. Wie es in Figur 3 beispielhaft zu sehen ist, ragt der Stator (37) derart weit nach unten in Richtung Fluidbereich, dass er mit dem weiteren Rotor (36) quer zur Rotationsachsenrichtung R überlappt, insbesondere so, dass der weitere Rotor (36) vollständig von dem Stator (37) umgeben ist.

Die drehbewegliche Lagerung des Drehkolben-Ventilglieds (7) ist ebenfalls in Figur 3 ersichtlich. Über Rotationslager (41, 43), durch die die Rotationsachse (R) verläuft, ist die drehbewegliche Lagerung realisiert. Vorteilhaft an der Ausführung gemäß Figur 3 ist, dass sich die Radiallager (41, 43) im Fluidbereich befinden, das heißt, zumindest im geöffneten Ventilgliedzustand von der Fluidströmung umströmt beziehungsweise umspült sind. Dies bringt eine zuverlässige, insbesondere permanente, Schmierung der Lagerungen (41 ,43) mit sich.

In Figur 3 sind die Lagerungen (41, 43) durch Zapfen-Vertiefungs-Eingriffstrukturen realisiert. Die Lagerung (41) des Ventilglieds (7) an dem Fluidgehäuse (5) erfolgt über einen ventilgliedseitigen Lagerungszapfen (45), welcher in eine fluidgehäuseseitige Lagerungsvertiefung (47) eingreift. Die Gehäuseseitige Lagerung (43) ist über gehäuseseitigen Lagerungszapfen (49) realisiert, welcher in eine ventilgliedseitige Lagerungsvertiefung (51) eingreift. Es hat sich erfindungsgemäß herausgestellt, dass selbst bei der hermetischen Abtrennung von Rotor (36) und Stator (37) eine zuverlässige Kraftübertragung zwischen dem elektromagnetischen Antrieb (3) und dem zu betätigenden Ventilglied (7) erfolgt. Der konstruktive Aufbau ist dadurch deutlich vereinfacht, das Stellventil (1) kann deutlich kompakter hergestellt werden und es kann auf zusätzliche Abdichtmaßnahmen verzichtet werden. Ein weiterer Vorteil besteht darin, dass ein deutlich effizienteres und kostengünstigeres Stellventil (1) geschaffen werden kann. Es kann auf kostengünstigere und/oder leistungsärmere elektromagnetische Stellantriebe (3) zurückgegriffen werden.

In Figur 4 ist eine weitere Teil-Schnittansicht des Stellventils (1) gezeigt, welche anhand der Linie IV-IV aus Figur 3 erzeugt wurde. Die Schnittansicht gemäß Figur 4 dient im Wesentlichen zur Veranschaulichung des Aufbaus des elektromagnetischen Antriebs (3) der Arbeitsmaschine (2). In Figur 4 ist zu erkennen, dass der elektromagnetische Antrieb (3) der beispielsweise ein Elektromotor ist, einen zentralen, im Wesentlichen zylindrischen Rotor (35) und einen diesen umgebenden Stator (37) aus mehreren in einem insbesondere gleichmäßigen Abstand in Umfangsrichtung bzgl. der Rotationsachsenrichtung R angeordnete Stator-Einheiten (38) aufweist.

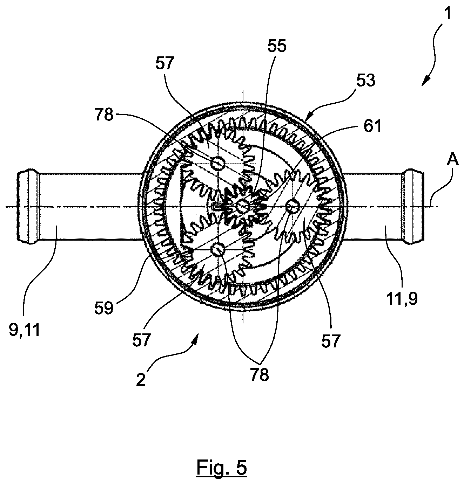

In einer beispielhaften Ausführung des erfindungsgemäßen Stellventils (1) ist der elektromagnetische Antrieb (3) mit dem Ventilglied (7) über ein Planetengetriebe verbunden, das im Allgemeinen mit der Ziffer (53) angedeutet ist und unter Bezugnahme auf Figur 5 erläutert wird, die eine Teil-Schnittansicht des Stellventils (1) zeigt, welche anhand der Linie V-V aus Figur 3 erzeugt wurde. Das Planetengetriebe (53) dient zur kraftübertragenden Kopplung zwischen Antrieb (3) und Ventilglied (7). Die von dem Antrieb (3) bereitgestellte Antriebskraft wird über den Rotor (36) dem Planetengetriebe (53) mitgeteilt, dessen Abtriebsverzahnung das Ventilglied (7) antreibt. Gemäß Figur 5 weist die Abtriebsverzahnung ein mittiges Sonnenrad (55), drei um das Sonnenrad (55) umlaufende Planetenräder (57) und einen Außenzahnkranz (59) auf. Dabei kämmen die Planetenräder (57) sowohl mit dem Sonnenrad (55) als auch mit dem Außenzahnkranz (59), der arbeitsmaschinengehäuseseitig angeordnet ist, insbesondere in das Arbeitsmaschinengehäuse (15) eingebracht oder eingearbeitet ist. Mit anderen Worten kann der Außenzahnkranz (59) aus einem Stück mit dem Arbeitsmaschinengehäuse (15) hergestellt sein.

In Figur 3 ist zu erkennen, dass das Gehäuse (15) einen sich parallel zur Rotationsachse R in Richtung des Fluidgehäuses (5) erstreckenden Verzahnungsflansch (77) umfasst, an welchem radial innenseitig die Abtriebsverzahnung ausgebildet ist. Mittels des Verzahnungsflansches (77) kann das Gehäuse (15) teleskopartig in das Fluidgehäuse (5) eingesetzt bzw. eingeschoben sein. Beispielsweise kann die Montage unter Ausbildung einer Presspassung zwischen Gehäuse (15) und Fluidgehäuse (5) erfolgen.

Das Ventilglied (7) umfasst eine sich nach radial außen erstreckende ringförmige Basis (73) und sich davon in Rotationsachsenrichtung R erstreckende Lagerstellen (78).

Zunächst wird die Antriebskraft von dem Rotor (36) auf das Sonnenrad (55) übertragen, welches an einem Lagerungszapfen (61) des Ventilglieds (7) gelagert ist. Der Lagerungszapfen (61) ist im Wesentlichen koaxial zur Rotationsachse R angeordnet. Das angetriebene Sonnenrad (55) treibt die Planetenräder (57) an, die sich am Außenkranz (59) abstützen und das Ventilglied (7) antreiben, d. h. in eine Rotationsbewegung um die Rotationsachse R versetzen. Die Planetenräder (57) sind wiederum über ventilgliedseitige, die Lagerstellen (78) bildende Lagerzapfen (65) drehbar bezüglich des Ventilglieds (7) und des Gehäuses (15) gelagert. Die ventilgliedseitigen Lagerzapfen (65) erstrecken sich parallel zur Rotationsachse R nach oben in Richtung des Gehäuses (15). Die ventilgliedseitigen Lagerzapfen (65) ragen in je eine dafür vorgesehene Aussparung, die als Lagerung für die Lagerzapfen (65) wirkt. Die Lagerungen führen zusätzlich das Ventilglied (7) relativ zu dem Gehäuse (15) bei dessen Rotationsbewegung.

Weitere alternative Ausführungsformen sind denkbar und unterscheiden sich beispielsweise durch die Abtriebsverzahnung. Ein Unterschied besteht darin, dass die Planetenräder (57) bezüglich antriebsmaschinengehäuseseitigen Lagerzapfen (63) drehbar gelagert sind, die im Wesentlichen parallel zur Rotationsachse R orientiert sind. Bei einer derartigen Ausführung weist das Gehäuse (15) gehäuseseitige Lagerzapfen (65) auf. Daraus ergibt sich ein weiterer Unterschied bezüglich der Struktur des Ventilglieds (7). Die ringförmige Basis (73) des Ventilglieds (7) ist in Radialrichtung größer bemessen als die Basis (73) des Ventilglieds (7) gemäß Figur 5. Ferner umfasst das Ventilglied (7) der Figuren 7 bis 10 einen Ringflansch (71), welcher den Außenkranz (59) aufweist.

In den beispielhaften Ausführungen sind Fluidgehäuse (5) und Gehäuse (15) mittels Laserschweißen aneinander befestigt, wobei das Gehäuse (15) und der Deckel (17) miteinander verschraubt sind. Der im Wesentlichen ebene Deckel (17) kann bezüglich seiner Dimension quer zur Rotationsachse R an eine Abmessung des Gehäuses (15) angepasst sein, insbesondere derart, dass der Deckel (17) bündig an das Gehäuse (15) anschließt. Das radial innere Bauteil aus Gehäuse (15) und Fluidgehäuse (5), hier das Fluidgehäuse (5), ist aus einem laserabsorbierenden Werkstoff, insbesondere Kunststoffmaterial, hergestellt, während das radial äußere Bauteil, hier das Gehäuse (15), aus einem lasertransparenten Werkstoff, insbesondere Kunststoffmaterial, hergestellt ist.

Um die Verschweißung von Fluidgehäuse (5) und Gehäuse (15) zu ermöglichen, weist das Gehäuse (15) einen radial außenseitig in Bezug auf das Fluidgehäuse (5) zu positionierenden Schweißflansch (83) auf und das Fluidgehäuse (5) einen in Bezug auf den Schweißflansch (83) radial innenseitig zu positionierenden Schweißflansch (85).

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHENLISTE

- 1: Stellventil
- 2: Arbeitsmaschine
- 3: Elektromagnetischer Antrieb
- 5: Fluidgehäuse
- 7: Ventilglied
- 9, 11: Fluideintritts- beziehungsweise Fluidaustrittsstutzen
- 13: Ventilraum
- 15: Gehäuse
- 17: Deckel
- 18: Verschraubung
- 19: elektrischer Anschlussstelle
- 21: Fluidbohrung
- 23: Fluidkanal
- 25, 27: Dichtung
- 29: Ventilsitz
- 31: Ringflansch
- 33: stirnseitiges Ende
- 35: Rotor
- 36: weiterer Rotor
- 37: Stator
- 38: Stator-Einheit
- 40: Magnetring
- 41, 43: Lagerung
- 45, 49: Lagerungszapfen
- 47, 51: Lagerungsvertiefung
- 53: Planetengetriebe
- 55: Sonnenrad
- 57: Planetenrad
- 59: Außenkranz
- 61: ventilgliedseitiger Lagerungszapfen
- 63: ventilgliedseitiger Lagerzapfen
- 65: antriebsgehäuseseitiger Lagerzapfen
- 67: ventilgliedseitige Lagerung
- 69: Abdeckung
- 71: Ringflansch
- 73: Basis
- 77: Verzahnungsflansch
- 83, 85: Schweißflansch von Antriebsgehäuse und Fluidgehäuse

- A: Längsachse
- R: Rotationsstellachse

## Patentansprüche

1. Stellventil (1), insbesondere Fluidventil, zum Einstellen einer Fluidströmung, wie einer Thermomanagement-Fluidströmung, insbesondere eines Kraftfahrzeugs, umfassend:
- ein Fluid führendes Fluidgehäuse (5);
- ein stellbares Ventilglied (7), das zum Schließen und wenigstens teilweise Freigeben des Fluidgehäuses (5) stellbar ist; und
- eine Arbeitsmaschine (2) zum Zuführen von Energie zu einem weiteren Fluid, wie einem Thermomanagement-Fluid, insbesondere eines Kraftfahrzeugs mit einem Antrieb zum Bereitstellen der Energie;
wobei der Antrieb der Arbeitsmaschine (2) kraftübertragungsgemäß mit dem Ventilglied (7) zum Stellen des Ventilglieds (7) verbunden ist und wobei der Antrieb der Arbeitsmaschine (2) als elektromagnetischer Antrieb mit einem Rotor und einem Stator ausgebildet ist und der Stator kraftübertragend mit dem Ventilglied (7) gekoppelt ist, **dadurch gekennzeichnet, dass** ein weiterer Rotor (36) in dem Fluidgehäuse angeordnet und form- und/oder kraftschlüssig mit dem Ventilglied (7) gekoppelt ist, wobei der elektromagnetische Antrieb (3) mit dem weiteren Rotor (36) kooperiert, um das Ventilglied (7) zu betätigen.

2. Stellventil (1) nach Anspruch 1, wobei die Kraftübertragung vom Antrieb auf das Ventilglied (7) mechanisch und/oder insbesondere kontaktlos magnetisch ist.

3. Stellventil (1) nach Anspruch 1 oder 2, wobei der weitere Rotor (36) teilweise durch das Ventilglied (7) und einen mit dem Ventilglied (7) kraftübertragend verbundenen Magnetring (40) gebildet ist.

4. Stellventil (1) nach einem der vorstehenden Ansprüche, wobei die Arbeitsmaschine (2) ein Gehäuse (15) aufweist, das von dem Fluidgehäuse (5) hermetisch getrennt ist, wobei insbesondere in dem Gehäuse (15) der Arbeitsmaschine (2) dessen elektromagnetischer Antrieb untergebracht ist.

5. Stellventil (1) nach Anspruch 4, wobei der weitere Rotor (36) derart in dem Fluidgehäuse (5) angeordnet ist, dass zumindest im geöffneten Zustand des Ventilglieds (7) der weitere Rotor (36) von der Fluidströmung umströmt ist.

6. Stellventil (1) nach einem der vorstehenden Ansprüche, wobei das Ventilglied, insbesondere der mit dem Ventilglied (7) gekoppelte weitere Rotor, unabhängig von dem Rotor des elektromagnetischen Antriebs der Arbeitsmaschine (2) ansteuerbar ist, wobei insbesondere der Stator der Arbeitsmaschine (2) mit einer überlagerten Pulsweitenmodulation bestrombar ist.

7. Stellventil (1) nach einem der vorstehenden Ansprüche, wobei die Arbeitsmaschine (2) eine Fluidenergiemaschine, insbesondere eine Pumpe, oder eine Strömungsmaschine, wie ein Lüfter oder ein Ventilator, ist.

8. Stellventil (1) nach einem der vorstehenden Ansprüche, wobei das Ventilglied (7) bezüglich des Gehäuses und des Fluidgehäuses rotatorisch gelagert ist, wobei insbesondere das Ventilglied (7) über je eine Lagerung, insbesondere ein Rotationslager, an dem Gehäuse (15) und dem Fluidgehäuse (5) gelagert ist.

9. Stellventil (1) nach Anspruch 8, wobei die Lagerungen derart insbesondere in dem Fluidgehäuse (5) angeordnet sind, dass sie permanent von Fluid umströmt sind.

10. Stellventil (1) nach einem der vorstehenden Ansprüche, wobei der weitere Rotor (36) und der Stator (37) des elektromagnetischen Antriebs und ggf. eine Lagerung zum Lagern des Ventilglieds an dem Gehäuse (15) in Bezug auf die Rotationsstellachse (R) auf gleicher Höhe angeordnet sind.

11. Stellventil (1) nach einem der vorstehenden Ansprüche in Verbindung mit Anspruch 4, wobei das Fluidgehäuse (5) und das Gehäuse (15) stoffschlüssig miteinander verbunden sind.

12. Stellventil (1) nach einem der vorstehenden Ansprüche in Verbindung mit Anspruch 4, wobei das Fluidgehäuse (5) und das Gehäuse (15) frei von einer das Fluidgehäuse (5) und das Gehäuse (15) verbindenden Durchführung insbesondere für eine die Antriebskraft des Antriebs auf das Ventilglied (7) übertragende Kraftübertragungskomponente, wie eine Stellstange, sind.

13. Stellventil (1) nach einem der vorstehenden Ansprüche in Verbindung mit Anspruch 4, wobei das Gehäuse (15) insbesondere stoffschlüssig mit einem Deckel verschlossen ist.

14. Stellventil (1) nach einem der vorstehenden Ansprüche, wobei der Antrieb (3) mit dem Ventilglied (7) über ein Planetengetriebe kraftübertragend gekoppelt ist und/oder wobei zwischen dem Magnetring (40) und dem Ventilglied eine Getriebeübersetzung, insbesondere ein Planetengetriebe, vorgesehen ist.

15. Stellventil (1) nach Anspruch 14, wobei das Planetengetriebe derart insbesondere in dem Fluidgehäuse (5) angeordnet ist, dass es permanent von Fluid umströmt ist.

16. Stellventil (1) nach Anspruch 14 oder 15 in Verbindung mit Anspruch 4, wobei das Planetengetriebe Planetenräder aufweist, die drehbar an dem Ventilglied (7) oder dem Gehäuse (15) gelagert sind und zum Bewegen des Ventilglieds (7) mit einem an dem Ventilglied (7), dem Fluidgehäuse (5) oder dem Gehäuse (15) angeordneten Außenzahnkranz zusammenwirken, wobei insbesondere der Außenzahnkranz in das Ventilglied (7), das Fluidgehäuse (5) oder das Gehäuse (15) eingebracht ist.

17. Stellventil (1) nach einem der vorstehenden Ansprüche, wobei:
- das Fluid führende Fluidgehäuse (5) einen Fluidkanal (23) aufweist;
- das stellbare Ventilglied (7) zum Schließen und wenigstens teilweise Freigeben des Fluidkanals (23) stellbar ist; und
- die Arbeitsmaschine (2) eine Pumpe, ein Lüfter oder ein Ventilator ist.

18. Leitungssystem für ein Kraftfahrzeug, insbesondere zum Kühlen eines Motors oder zum Bereitstellen eines Anoden- und/oder Kathodenstroms in einer Brennstoffzelle, umfassend ein Stellventil (1) nach einem der vorstehenden Ansprüche.

## Claims

1. Control valve (1), in particular fluid valve, for adjusting a fluid flow, such as a thermal management fluid flow, in particular of a motor vehicle, comprising:
- a fluid-carrying fluid housing (5);
- an adjustable valve member (7) which can be adjusted to close and at least partially release the fluid housing (5); and
- a working machine (2) for supplying energy to a further fluid, such as a thermal management fluid, in particular of a motor vehicle, having a drive for providing the energy;
wherein the drive of the working machine (2) is connected in a force-transmitting manner to the valve member (7) for adjusting the valve member (7), and wherein the drive of the working machine (2) is designed as an electromagnetic drive having a rotor and a stator, and the stator is coupled to the valve member (7) in a force-transmitting manner, **characterized in that** a further rotor (36) is arranged in the fluid housing and is coupled to the valve member (7) in a form-fitting and/or force-fitting manner, wherein the electromagnetic drive (3) cooperates with the further rotor (36) in order to actuate the valve member (7).

2. Control valve (1) according to claim 1, wherein the force transmission from the drive to the valve member (7) is mechanical and/or in particular contactless magnetic.

3. Control valve (1) according to claim 1 or 2, wherein the further rotor (36) is partially formed by the valve member (7) and a magnetic ring (40) connected to the valve member (7) in a force-transmitting manner.

4. Control valve (1) according to one of the preceding claims, wherein the working machine (2) has a housing (15) which is hermetically separated from the fluid housing (5), wherein in particular the electromagnetic drive of the working machine (2) is accommodated in the housing (15) thereof.

5. Control valve (1) according to claim 4, wherein the further rotor (36) is arranged in the fluid housing (5) in such a way that the fluid flow flows around the further rotor (36) at least in the open state of the valve member (7).

6. Control valve (1) according to one of the preceding claims, wherein the valve member, in particular the further rotor coupled to the valve member (7), can be controlled independently of the rotor of the electromagnetic drive of the working machine (2), wherein in particular the stator of the working machine (2) can be energized with a superimposed pulse width modulation.

7. Control valve (1) according to one of the preceding claims, wherein the working machine (2) is a fluid energy machine, in particular a pump, or a turbomachine, such as a fan or a ventilator.

8. Control valve (1) according to one of the preceding claims, wherein the valve member (7) is rotatably mounted with respect to the housing and the fluid housing, wherein in particular the valve member (7) is mounted on the housing (15) and the fluid housing (5) via a respective bearing, in particular a rotary bearing.

9. Control valve (1) according to claim 8, wherein the bearings are arranged in particular in the fluid housing (5) in such a way that fluid flows around them permanently.

10. Control valve (1) according to one of the preceding claims, wherein the further rotor (36) and the stator (37) of the electromagnetic drive and optionally a bearing for mounting the valve member on the housing (15) are arranged at the same height with respect to the rotational adjustment axis (R).

11. Control valve (1) according to one of the preceding claims in conjunction with claim 4, wherein the fluid housing (5) and the housing (15) are connected to one another in a materially bonded manner.

12. Control valve (1) according to one of the preceding claims in conjunction with claim 4, wherein the fluid housing (5) and the housing (15) are free of a feedthrough connecting the fluid housing (5) and the housing (15), in particular for a force transmission component, such as an adjustment rod, transmitting the drive force of the drive to the valve member (7).

13. Control valve (1) according to one of the preceding claims in conjunction with claim 4, wherein the housing (15) is closed in particular in a materially bonded manner with a cover.

14. Control valve (1) according to one of the preceding claims, wherein the drive (3) is coupled to the valve member (7) in a force-transmitting manner via a planetary gear and/or wherein a transmission, in particular a planetary gear, is provided between the magnetic ring (40) and the valve member.

15. Control valve (1) according to claim 14, wherein the planetary gear is arranged in particular in the fluid housing (5) in such a way that fluid flows around it permanently.

16. Control valve (1) according to claim 14 or 15 in conjunction with claim 4, wherein the planetary gear has planet gears which are rotatably mounted on the valve member (7) or the housing (15) and, in order to move the valve member (7), cooperate with an outer ring gear arranged on the valve member (7), the fluid housing (5) or the housing (15), wherein in particular the outer ring gear is introduced into the valve member (7), the fluid housing (5) or the housing (15).

17. Control valve (1) according to one of the preceding claims, wherein:
- the fluid-carrying fluid housing (5) has a fluid channel (23);
- the adjustable valve member (7) can be adjusted to close and at least partially release the fluid channel (23); and
- the working machine (2) is a pump, a fan or a ventilator.

18. Line system for a motor vehicle, in particular for cooling an engine or for providing an anode and/or cathode fluid flow in a fuel cell, comprising a control valve (1) according to one of the preceding claims.

## Revendications

1. Soupape de réglage (1), en particulier soupape à fluide, pour régler un écoulement de fluide, tel qu'un écoulement de fluide de gestion thermique, en particulier d'un véhicule automobile, comprenant :
- un boîtier de fluide (5) transportant un fluide ;
- un organe de soupape réglable (7) qui peut être réglé pour fermer et libérer au moins partiellement le boîtier de fluide (5) ; et
- une machine de travail (2) pour fournir de l'énergie à un autre fluide, tel qu'un fluide de gestion thermique, en particulier d'un véhicule automobile, avec un entraînement pour fournir l'énergie ;
dans laquelle l'entraînement de la machine de travail (2) est relié par transmission de force à l'organe de soupape (7) pour régler l'organe de soupape (7) et dans laquelle l'entraînement de la machine de travail (2) est réalisé sous forme d'entraînement électromagnétique avec un rotor et un stator et le stator est accouplé par transmission de force à l'organe de soupape (7), **caractérisée en ce qu'**un autre rotor (36) est disposé dans le boîtier de fluide et est accouplé par complémentarité de formes et/ou par friction à l'organe de soupape (7), l'entraînement électromagnétique (3) coopérant avec l'autre rotor (36) pour actionner l'organe de soupape (7).

2. Soupape de réglage (1) selon la revendication 1, dans laquelle la transmission de force de l'entraînement à l'organe de soupape (7) est mécanique et/ou en particulier magnétique sans contact.

3. Soupape de réglage (1) selon la revendication 1 ou 2, dans laquelle l'autre rotor (36) est formé en partie par l'organe de soupape (7) et un anneau magnétique (40) relié par transmission de force à l'organe de soupape (7).

4. Soupape de réglage (1) selon l'une quelconque des revendications précédentes, dans laquelle la machine de travail (2) présente un boîtier (15) qui est séparé hermétiquement du boîtier de fluide (5), l'entraînement électromagnétique de la machine de travail (2) étant en particulier logé dans le boîtier (15) de celle-ci.

5. Soupape de réglage (1) selon la revendication 4, dans laquelle l'autre rotor (36) est disposé dans le boîtier de fluide (5) de telle sorte qu'au moins dans l'état ouvert de l'organe de soupape (7), l'écoulement de fluide circule autour de l'autre rotor (36).

6. Soupape de réglage (1) selon l'une quelconque des revendications précédentes, dans laquelle l'organe de soupape, en particulier l'autre rotor accouplé à l'organe de soupape (7), peut être commandé indépendamment du rotor de l'entraînement électromagnétique de la machine de travail (2), le stator de la machine de travail (2) pouvant en particulier être alimenté en courant avec une modulation de largeur d'impulsion superposée.

7. Soupape de réglage (1) selon l'une quelconque des revendications précédentes, dans laquelle la machine de travail (2) est une machine à énergie fluidique, en particulier une pompe, ou une turbomachine, telle qu'un ventilateur ou un ventilateur.

8. Soupape de réglage (1) selon l'une quelconque des revendications précédentes, dans laquelle l'organe de soupape (7) est monté en rotation par rapport au boîtier et au boîtier de fluide, l'organe de soupape (7) étant en particulier monté sur le boîtier (15) et le boîtier de fluide (5) par le biais d'un palier respectif, en particulier d'un palier de rotation.

9. Soupape de réglage (1) selon la revendication 8, dans laquelle les paliers sont disposés en particulier dans le boîtier de fluide (5) de telle sorte qu'du fluide circule en permanence autour d'eux.

10. Soupape de réglage (1) selon l'une quelconque des revendications précédentes, dans laquelle l'autre rotor (36) et le stator (37) de l'entraînement électromagnétique et éventuellement un palier pour monter l'organe de soupape sur le boîtier (15) sont disposés à la même hauteur par rapport à l'axe de réglage en rotation (R).

11. Soupape de réglage (1) selon l'une quelconque des revendications précédentes en liaison avec la revendication 4, dans laquelle le boîtier de fluide (5) et le boîtier (15) sont reliés l'un à l'autre par liaison de matière.

12. Soupape de réglage (1) selon l'une quelconque des revendications précédentes en liaison avec la revendication 4, dans laquelle le boîtier de fluide (5) et le boîtier (15) sont exempts d'un passage reliant le boîtier de fluide (5) et le boîtier (15), en particulier pour un composant de transmission de force transmettant la force d'entraînement de l'entraînement à l'organe de soupape (7), tel qu'une tige de réglage.

13. Soupape de réglage (1) selon l'une quelconque des revendications précédentes en liaison avec la revendication 4, dans laquelle le boîtier (15) est fermé en particulier par liaison de matière avec un couvercle.

14. Soupape de réglage (1) selon l'une quelconque des revendications précédentes, dans laquelle l'entraînement (3) est accouplé par transmission de force à l'organe de soupape (7) par le biais d'un engrenage planétaire et/ou dans laquelle une transmission par engrenages, en particulier un engrenage planétaire, est prévu entre l'anneau magnétique (40) et l'organe de soupape.

15. Soupape de réglage (1) selon la revendication 14, dans laquelle l'engrenage planétaire est disposé en particulier dans le boîtier de fluide (5) de telle sorte qu'du fluide circule en permanence autour de lui.

16. Soupape de réglage (1) selon la revendication 14 ou 15 en liaison avec la revendication 4, dans laquelle l'engrenage planétaire présente des roues planétaires qui sont montées en rotation sur l'organe de soupape (7) ou le boîtier (15) et, pour déplacer l'organe de soupape (7), coopèrent avec une couronne dentée extérieure disposée sur l'organe de soupape (7), le boîtier de fluide (5) ou le boîtier (15), la couronne dentée extérieure étant en particulier formée dans l'organe de soupape (7), le boîtier de fluide (5) ou le boîtier (15).

17. Soupape de réglage (1) selon l'une quelconque des revendications précédentes, dans laquelle :
- le boîtier de fluide (5) transportant un fluide présente un canal de fluide (23) ;
- l'organe de soupape réglable (7) peut être réglé pour fermer et libérer au moins partiellement le canal de fluide (23) ; et
- la machine de travail (2) est une pompe, un ventilateur ou un ventilateur.

18. Système de conduite pour un véhicule automobile, en particulier pour refroidir un moteur ou pour fournir un flux d'anode et/ou de cathode dans une pile à combustible, comprenant une soupape de réglage (1) selon l'une quelconque des revendications précédentes.
